# FASCICULE DE BREVET EUROPEEN

(11) **EP 0 678 171 B1**
(45) Date de publication et mention de la délivrance du brevet: **30.12.1998**
(21) Numéro de dépôt: 95900809.5
(22) Date de dépôt: 08.11.1994
(51) Int. Cl.: F16D 13/64

(54) **DISQUE PORTE-GARNITURES POUR DISQUE DE FRICTION, NOTAMMENT POUR VEHICULE AUTOMOBILE**
REIBEBELÄGE TRAGENDE SCHEIBE FÜR REIBUNGSSCHEIBE,INSBESONDERE FÜR KRAFTFAHRZEUGE
LINING SUPPORT DISC FOR FRICTION DISC, IN PARTICULAR FOR MOTOR VEHICLES

(30) Priorité: 09.11.1993 FR 9313341; 18.03.1994 WO PCT/FR94/00297; 21.06.1994 WO PCT/FR94/00752
(43) Date de publication de la demande: 25.10.1995
(73) Titulaire: VALEO, 75017 Paris (FR)
(72) Inventeur: VILLATA, Gino, I-14021 Buttigliera d'Asti (IT)
(74) Mandataire: Gamonal, Didier
(86) Numéro de dépôt international: FR9401298
(87) Numéro de publication internationale: WO9513483

(56) Documents cités:
- DE-U- 8 521 344
- FR-A- 786 598
- FR-A- 794 147
- FR-A- 2 168 833
- FR-A- 2 424 446
- FR-A- 2 600 732
- GB-A- 1 465 913
- GB-A- 2 225 818
- US-A- 4 108 699

## Description

La présente invention concerne un disque porte-garnitures propre à la constitution d'un disque de friction, notamment pour véhicule automobile, du genre comportant au moins un disque de support comprenant une partie centrale et une partie périphérique fractionnée en pales radiales propre à recevoir deux garnitures de frottement, éventuellement fractionnées, s'étendant de part et d'autre de ladite partie périphérique, chacune desdites pales se raccordant à ladite partie centrale par un pied comportant au moins une zone de portée globalement parallèle au plan moyen de ladite partie centrale, pour contact avec l'une au moins desdites garnitures de frottement et fixation de celle-ci. Un tel disque est décrit dans le document GB-A-1 465 913 conforme au préambule de la revendication 1. Dans celui-ci il est prévu deux zones de portée et de fixation de part et d'autre d'une zone centrale raccordée à la partie centrale du disque par un pied doté d'un pli tangentiel. La zone centrale à une surface moindre que lesdites zones de portée.

Les zones de portée sont formées à la faveur de plis raccordant la zone centrale à deux autres zones de portée s'étendant de la périphérie interne à la périphérie externe de chaque pale.

Ainsi les pales ont une grande étendue circonférentielle ce qui ne permet pas d'augmenter leur nombre et la surface de contact entre les pales et les garnitures de frottement. En outre un tel disque porte-garnitures ne peut tourner à grande vitesses.

Pour créer un nouveau disque porte-garnitures standard pouvant tourner à une plus grande vitesse, tout en favorisant la diminution des phénomènes d'inscrutation, de broutement et en ayant une possibilité de mise en cône, on a proposé dans la demande européenne EP-A-05 79554 déposée le 15 Juillet 1993, de créer un disque porte-garnitures comportant des pales tripodes.

Plus précisément dans ce document, pour formation de pales du type tripode, certaines au moins desdites pales, dites pales tripodes, présentent une zone centrale de portée, pour contact avec l'une des garnitures de frottement et fixation de celle-ci, et à leur périphérie externe deux zones périphériques de portée supplémentaires de part et d'autre de ladite zone centrale pour contact avec l'autre desdites garnitures de frottement.

La zone centrale de portée se rétrécit en direction de la périphérie externe du disque porte-garnitures et est décalée axialement par rapport à la partie centrale et aux deuxdites zones périphériques de portée.

La zone centrale de portée est raccordée, d'une part, à la partie centrale du disque porte-garnitures par un pli tangentiel perpendiculaire à l'axe de symétrie radial desdites pales tripodes et, d'autre part, auxdites zones périphériques par des plis périphériques obliques par rapport à l'axe de symétrie radial desdites pales tripodes.

Grâce à cette disposition, on peut augmenter les surfaces de portée, ainsi que le nombre de pales, et la zone centrale de portée à une très grande largeur circonférentielle, en sorte que les pieds des pales ont une très grande largeur et sont robustes.

Ainsi on peut avoir des surfaces de contact supérieures à 25% de la surface totale du dos de la garniture lorsque celle-ci est continue, et on diminue la distance entre deux zones centrales de portée.

Il en résulte que les phénomènes d'incrustation, dus à un affaissement de la garniture de frottement à l'intérieur des creux existant entre deux portées d'appui, sont diminués notamment lorsque l'on utilise des garnitures de frottement du type organique.

Ce disque porte-garnitures peut tourner à des vitesses de rotation plus élevées en étant plus résistant aux phénomènes de la force centrifuge.

Les phénomènes de broutement (engendrés par les vibrations se produisant dans la chaîne cinématique en allant du moteur aux arbres de roues), se produisant aussi bien à faible couple lors d'une manoeuvre de parking ou en garage, qu'à couple élevé lors d'un changement de vitesses sur route ou lors d'un démarrage en pente, sont réduits.

Ce disque porte-garnitures permet une réduction des usures des garnitures de frottement et du fait de la configuration de la pale peut suivre les mouvements de mise en cône du plateau de pression de l'embrayage.

La présente invention a pour objet de tirer un nouveau parti de ces pales du type tripode.

Suivant l'invention, ce problème est résolu par la partie caractérisante de la revendication 1.

Grâce à cette disposition, on peut réduire encore l'inertie du disque porte-garnitures et celui-ci peut tourner à des vitesses de rotation encore plus élevées.

En effet les garnitures de frottement ont alors juste l'épaisseur utile et il n'y a pas de surépaisseur à prévoir comme dans le cas d'une fixation à rivetage.

Ceci est rendu possible grâce aux zones centrales de portée, qui offrent une grande surface d'appui aux garnitures de frottement, et permettent d'avoir des plis tangentiels de grande longueur.

Ainsi on obtient une bonne fixation des garnitures de frottement sur lesdites zones centrales de portée. Cette fixation est très robuste.

Il devient encore possible de tirer un nouveau parti de ce collage.

En effet avec les disques à pales tripodes, on obtient une bonne progressivité axiale lors de l'engagement de l'embrayage (serrage progressif des garnitures de frottement entre les plateaux de pression et de réaction de l'embrayage).

Grâce aux plis permettant des décalages axiaux, on obtient une bonne stabilité des pales et un bon parallélisme des garnitures de frottement. En outre les pieds des pales sont très robustes, grâce notamment à la grande longueur des plis tangentiels.

Usuellement cette progressivité est obtenue d'une autre manière. En effet, comme décrit par exemple dans le document US-A-5,076,409, les garnitures de frottement sont collées sur deux disques plans et la progressivité est réalisée par des protubérances en matière élastique intervenant entre les deux disques.

Plus précisément certaines au moins desdites protubérances relient entre eux les deux disques.

Dans le document GB-A-2 191 831 cette progressivité est réalisée à l'aide d'un seul disque métallique, doté à sa périphérie de deux séries de pattes radiales décalées axialement les unes par rapport aux autres.

Les garnitures de frottement sont rapportées sur les pattes radiales de faible surface d'appui à l'aide d'un matériau en matière élastique.

Dans les deux solutions précitées, le disque porte-garnitures a une épaisseur minimale et une inertie réduite.

Néanmoins, cela nécessite de faire appel à des protubérances en matière élastique. Pour éviter cela, suivant une caractéristique de l'invention, il est proposé une disposition dans laquelle le disque porte-garnitures comporte deux disques de support accolés, dont l'un au moins comporte des pales du type tripode, sur les zones centrales de portée desquelles est fixée par collage l'une des garnitures de frottement, l'autre garniture de frottement étant fixée par collage sur l'autre disque.

Grâce à cette disposition, on obtient un disque porte-garnitures à inertie réduite, et à épaisseur minimale. Ce disque peut donc tourner à des vitesses de rotation très élevées et présente en outre de bonnes portées pour les garnitures de frottement et une stabilité de progressivité axiale.

En outre, pour un même couple à transmettre, ces disques ont une épaisseur plus faible que celui du disque du document GB-A-2 191 831, ce qui est favorable pour la progressivité.

On appréciera, contrairement aux réalisations du document US-A-5,076,409, que les disques n'ont pas à être dotés de plis au niveau de leur zone de fixation mutuelle.

Avantageusement les deux disques porte-garnitures précités sont dotés de pales tripodes montées dos-à-dos et des moyens d'accouplement à action axiale unidirectionnels interviennent entre les deux disques de support pour limiter l'écartement entre ceux-ci.

Ces moyens d'accouplement comportent par exemple des crochets qui limitent l'écartement entre les deux disques de support.

Ces crochets peuvent être implantés soit dans les zones centrales de portée, soit dans les zones périphériques de portée, soit dans les disques de support par exemple au niveau des plis tangentiels en dessous de ceux-ci.

Grâce à cette disposition, il est possible de former un sous-ensemble comportant les deux disques de support avec leur garniture de frottement.

Ultérieurement on rapporte ces deux disques par exemple sur les rondelles de guidage de la friction d'embrayage.

Grâce aux crochets, il est possible de réaliser un assemblage du type baïonnette.

En outre, les moyens d'accouplement limitent également l'écartement entre les deux disques sous l'effet de la chaleur régnant dans l'embrayage.

Ainsi qu'on le sait dans un embrayage les plateaux de pression et de réaction, ainsi que les garnitures de frottement, peuvent atteindre des températures non négligeables, notamment lors de parcours montagneux. Il en résulte des déformations thermiques au niveau du disque porte-garnitures.

Grâce aux moyens d'accouplement, ces déformations thermiques seront limitées, en sorte que l'usure des garnitures de frottement est ainsi réduite.

La description qui va suivre illustre l'invention en regard des dessins annexés dans lesquels :
- la figure 1 est une vue en coupe axiale d'un disque porte-garnitures selon l'invention ;
- la figure 2 est une vue en coupe selon la ligne 2-2 de la figure 1 ;
- la figure 3 est une vue en coupe selon la ligne 3-3 de la figure 1 ;
- la figure 4 est une vue en coupe selon la ligne 4-4 de la figure 2 ;
- les figures 5 et 6 sont des vues analogues à la figure 1, pour encore d'autres exemples de réalisation ;
- la figure 7 est une vue partielle analogue à la figure 2 pour encore un autre exemple de réalisation.

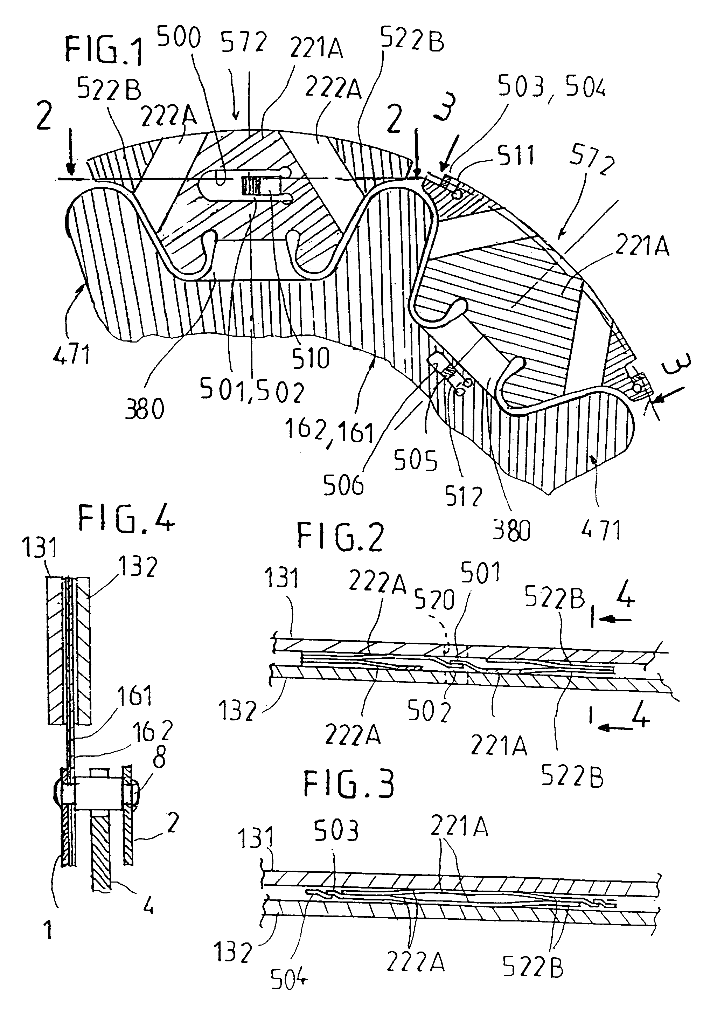

A la figure 1 est illustré un disque porte-garnitures doté de pales tripodes du type de celle de la figure 20 du document EP 0 579 554 et par simplicité on utilisera les mêmes références pour les éléments communs à l'invention et à ceux dudit document.

Ce disque porte-garnitures a la constitution d'un disque de friction pour véhicule automobile.

Il comporte une partie centrale 161,162 et une partie périphérique fractionnée en pales radiales 572 propre à recevoir des garnitures de frottement 131,132, chacune desdites pales se raccordant à ladite partie centrale par un pied 380 et comportant au moins une zone de portée 221A globalement parallèle au plan moyen de ladite partie centrale, pour contact avec l'une au moins desdites garnitures de frottement et fixation de celle-ci.

Pour formation de pales du type tripode, les pales 572 présentent une zone centrale de portée 221A, pour contact avec l'une desdites garnitures de frottement 131,132 et fixation de celles-ci, et deux zones périphériques de portée 522B de part et d'autre de ladite zone centrale 221A pour contact avec l'autre desdites garnitures de frottement.

La zone centrale de portée 221A se rétrécit en direction de la périphérie externe dudit disque porte-garnitures et est décalée axialement par rapport à la partie centrale 161,162 et aux deuxdites zones périphériques de portée 522B.

La zone centrale de portée 221A est raccordée, d'une part, à la partie centrale 161,162 du disque porte-garnitures par un pli tangentiel 380 perpendiculaire à l'axe de symétrie radial desdites pales tripodes, et, d'autre part, auxdites zones périphériques par des plis périphériques 222A obliques par rapport à l'axe de symétrie radial desdites pales tripodes.

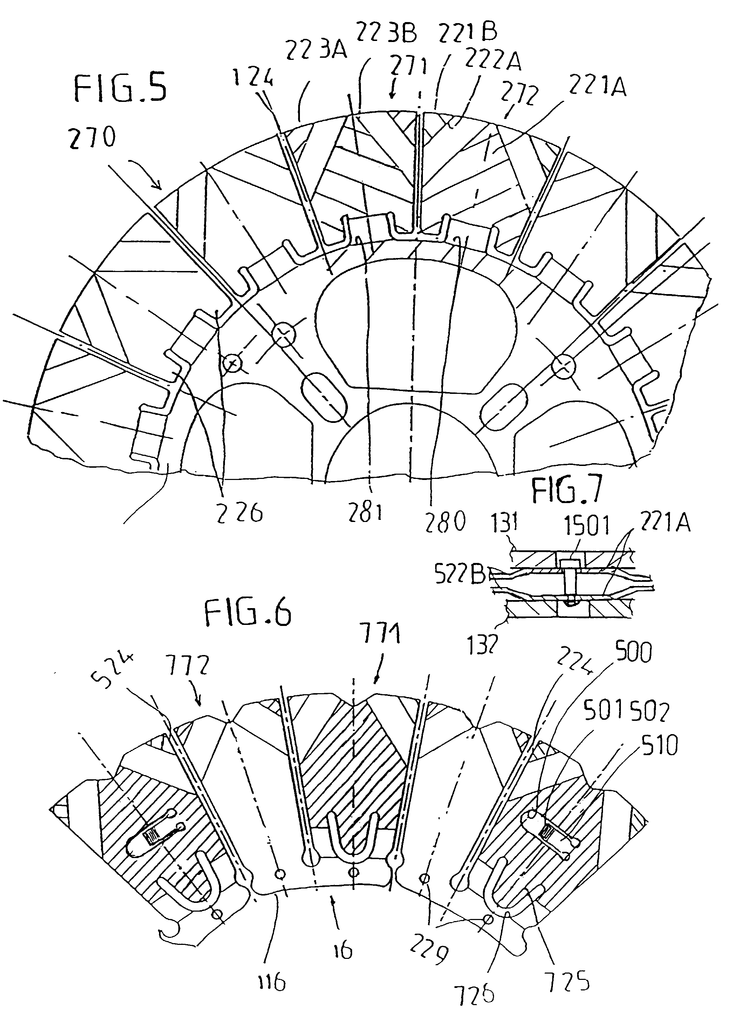

Les plis 222 A convergent en direction de la périphérie externe des pales. Il en resulte que les zones périphériques de portée 522B s'étendent radialement au-delà du pli tangentiel 380 et sont des zones de portée supplémentaires que présente chaque pale tripode à sa périphérie externe comme mieux visible à la figure 1 ainsi que dans les figures 5 et 6.

Ainsi les zones centrales de portée 221A ont une grande étendue circonférentielle et il en est de même des plis tangentiels 380, en sorte que les pieds des pales 372 sont très robustes.

Ici les pales tripodes 572 sont d'un seul tenant avec la partie centrale 161,162 en forme de disque. Ces pales 572 alternent circonférentiellement avec une série de languettes radiales 471 dans le plan de la partie centrale 161,162 du disque porte-garnitures. Ces languettes 471 sont d'un seul tenant avec la partie centrale 161,162 en forme de disque.

Les zones périphériques de portée 522B s'étendent radialement en partie au-dessus des languettes 471 à extrémité arrondie enveloppée en partie par les zones 522B, en forme d'aile d'oiseau. La zone centrale 221A comporte à sa périphérie interne deux pattes encadrant le pli tangentiel 380. La surface d'appui de la zone centrale 221A est ainsi augmentée tout en ayant un pli tangentiel 380 de grande longueur, ce qui est favorable pour le collage de la garniture de frottement concernée et la robustesse des pales 572.

On peut tirer parti de cette disposition pour pratiquer des découpes 500 de manière décrite ci-après dans la zone centrale 221A.

Grâce à ces dispositions, les zones périphériques 522B ont une surface d'appui non négligeable et la zone centrale de portée 221A est augmentée par rapport à celle des figures 6,14,15,16 du susmentionné document EP 0 579 554.

Bien entendu le disque porte-garnitures peut avoir une configuration analogue à celle desdites figures 6,14,15,16 du susmentionné document.

Quoiqu'il en soit, suivant l'invention, la garniture de frottement est directement collée sur sa zone centrale de portée associée 221A.

On obtient ainsi un disque porte-garnitures ayant une inertie réduite et une bonne progressivité.

Ici le disque porte-garnitures comporte deux supports 161,162 accolés. Sur chaque zone centrale de portée d'un support est fixée par collage une garniture de frottement 131,132 de manière décrite ci-après. Ces supports sont destinés à être fixés à une rondelle de guidage 1 d'un amortisseur de torsion par l'intermédiaire de colonnettes 8 reliant entre elles les deux rondelles de guidage 1,2, que comporte l'amortisseur de torsion.

Ces colonnettes traversant pour ce faire, à la faveur d'ouvertures, un voile de moyeu 4 de l'amortisseur.

Dans cet exemple, les disques de support 161,162 sont accouplés de manière élastique à un moyeu non visible cannelé intérieurement pour son calage en rotation sur l'arbre d'entrée de la boîte de vitesses.

Les garnitures de frottement 131,132 sont ici circulairement continues en étant du type organique comme par exemple dans le document FR-A-2 094 693 en étant par exemple renforcées par des fibres de verre, de "KEVELAR" (marque déposée).

Ces garnitures 131,132 sont destinées à être serrées entre les plateaux de pression et de réaction de l'embrayage (non visibles), ledit plateau de réaction étant de manière connue en soi calé en rotation sur le vilebrequin du moteur à combustion interne.

Usuellement des organes élastiques à action circonférentielle (non visibles) sont montés dans des fenêtres pratiquées en vis-à-vis dans les rondelles de guidage 1,2 et dans le voile 4 encadré par les rondelles 1,2.

En variante les supports 161,162 peuvent être fixés à un voile solidaire du moyeu.

Pour plus de précision, on se reportera par exemple, aux figures 2 à 4, 22 et 28 du susmentionné document EP 0 579 554.

Ici les disques 161,162 sont identiques et sont montés dos-à-dos, leurs languettes 471 étant en contact les unes avec les autres, tandis que les zones périphériques 522B des pales tripodes 572 sont en contact les unes avec les autres d'un disque à l'autre.

Les zones centrales de portée 221A sont en vis-à-vis.

Les zones périphériques 522B sont ici dans le plan des disques 161,162, ce qui permet d'obtenir une bonne stabilité des garnitures de frottement 131,132.

Pour formation d'un sous-ensemble disques 161,162 garnitures 131,132, des moyens d'accouplement à action axiale unidirectionnels propres à limiter l'écartement entre les deux disques 161,162 sont prévus.

Ces moyens d'accouplement comportent dans les figures 1 à 3 au moins un crochet porté par l'un des disques 161,162 et propre à venir en butée avec une surface de butée associée portée par l'autre disque.

Le crochet est soit porté par la zone centrale 221A, soit par les zones périphériques 522B, soit par la partie centrale du disque 161,162 de préférence au voisinage des plis tangentiels 380 en dessous de ceux-ci.

Suivant une forme de réalisation, ces moyens d'accouplement comportent pour chacun des disques 161,162 des pattes propres à venir en contact les unes avec les autres. Ces pattes appartiennent à des crochets.

Plus précisément dans une forme de réalisation (figures 1 et 2) les moyens d'accouplement 501,502 comportent pour chaque disque 161,162 une patte respectivement 501,502 formée par découpe dans la zone centrale de portée 221A sur laquelle est fixée par collage la garniture de frottement 131,132 concernée.

Ces pattes 501,502 sont formées à la faveur d'une découpe 500, en forme de trou oblong, pratiquée dans la zone centrale 221A. Les pattes 501,502 se raccordent à la zone centrale 221A par une zone inclinée 510 formant un pli, qui vient s'enraciner dans la zone centrale 221A, avec formation de trous (figure 1) pour limiter les amorces de rupture.

Il est donc créé un crochet 501,502-510 qui s'étend en majeure partie d'un côté d'un axe de symétrie radial de la pale tripode 572, seule la patte 501,502 s'étend de part et d'autre dudit axe pour coopérer avec la patte associée de l'autre disque.

Ainsi la patte 501,502 s'étend parallèlement à la zone centrale de portée 221A en étant décalée axialement en direction de la garniture de frottement opposée à celle fixée sur la zone centrale 221A.

Ce décalage axial est obtenu grâce la zone inclinée 510 constituant un pli. Ainsi la patte 501 s'étend en porte-à-faux, et le trou oblong 500 est globalement parallèle aux plis tangentiels 380.

Pour des questions de robustesse, ce trou 500 s'étend radialement, centralement entre la périphérie externe de la zone centrale 221A et le pli tangentiel 380 formant ici à lui seul le pied de la pale tripode 572.

Ce trou 500 est allongé perpendiculairement à l'axe de symétrie radial de la pale 572 et ce de manière symétrique entre deux les plis 221A de la pale 572.

Ainsi qu'on l'aura compris, l'un des disques 161,162 comporte une patte 501,502 s'étendant d'un bord de la zone de portée 221A en direction de l'autre bord de ladite zone 221A et vice versa pour l'autre disque.

Il est possible de faire ainsi un montage du type baïonnette. Par exemple la patte 501 de l'un des disques 161,162 est introduite dans l'ouverture 500 de l'autre disque 162,161 puis est tournée circonférentiellement pour venir en prise avec la patte associée 502 de l'autre disque.

Bien entendu la découpe 500 est dimensionnée en conséquence. On forme ainsi aisément un sous-ensemble comportant les deux disques 161,162 et les deux garnitures 131,132, l'écartement axial étant limité par coopération des pattes 501,502.

Lorsque le sous-ensemble 161,162,131,132 est monté sur les rondelles de guidage 1,2, les pattes 501,502 sont en prise l'une de l'autre lorsque l'embrayage est désengagé comme visible dans la figure 2.

L'écartement axial entre les pales tripodes 572 est ainsi limité.

On notera que dans cette figures, les pattes 501,502 sont globalement dans le même plan que les zones de portée périphériques 522B, elles-mêmes dans le plan des disques 161,162.

Cela est rendu possible du fait que les zones centrales de portée 221A ont une grande surface.

Bien entendu les pattes des moyens d'accouplement peuvent être implantées au niveau des portées périphériques 522B comme visible dans les figures 1 et 3.

Ainsi les pattes 503,504 se raccordent à la zone périphérique de portée 522B par un pli 511 en étant décalé axialement par rapport à la zone périphérique 522B, et ce parallèlement à celle-ci.

On procède également à un montage du type baïonnette. Dans cette variante, les pattes 503,504 sont implantées à la périphérie externe des zones 522B à raison d'une patte par zone périphérique. Il est ainsi formé deux crochets 503,504-511 par pales 572.

On appréciera que la zone de portée centrale 221A est intacte en étant dépourvue de toute découpe.

Ainsi les garnitures 131,132 sont collées sur une plus grande zone de portée.

Ainsi qu'on l'aura compris, grâce aux plis 380, les disques 161,162 divergent l'un par rapport à l'autre et dans un embrayage lors de la manoeuvre de celui-ci les garnitures 131,132 sont destinées à être rapprochées l'une par rapport à l'autre et il en est de même des pales 572. Grâce aux plis 222A les disques 161,162 convergent les uns par rapport aux autres et lors de cette manoeuvre d'embrayage, on écrase élastiquement les pales 572 ce qui permet d'obtenir la progressivité voulue.

Bien entendu la position des pattes 503,504, et donc leur décalage axial par rapport aux zones centrales de portée 221A et aux zones périphériques de portée 522B, est telle que lesdites pattes autorisent un tel écrasement des garnitures 131,132. Il en est de même en ce qui concerne les pattes 501,502.

Bien entendu les pattes 501,502 peuvent très bien ne pas être dans le plan des zones de portée 522B.

Dans ce cas, il suffit, comme visible en pointillés à la figure 2, de créer des trous de dégagement 520 dans les garnitures de frottement 131,132 pour éviter toute interférence des pattes 501,502 avec les garnitures de frottement 131,132.

Tout cela dépend donc des applications.

Ainsi qu'on l'aura compris on obtient une bonne progressivité.

On appréciera également que les pales 572 peuvent suivre le mouvement de mise en cône du plateau de pression, sous l'effet de la chaleur, grâce notamment à leur pli 380, ce qui permet de diminuer les usures.

On appréciera que les moyens d'accouplement permettent alors de limiter également l'écartement entre les garnitures 131,132 sous l'effet des déformations thermiques. Ces moyens d'accouplement limitent donc l'ouverture entre les deux disques 161,162.

Bien entendu la présente invention n'est pas limitée à l'exemple de réalisation décrit.

Ainsi le disque porte-garnitures peut ne comporter qu'un seul disque de support avec des pales tripodes alternant avec des languettes radiales comme par exemple dans la figure 25 du susmentionné document EP 0 579 554, les pales tripodes portant par leur zone centrale de portée la garniture de frottement destinée à coopérer avec le plateau de pression de l'embrayage, ladite garniture étant fixée par collage sur lesdites zones centrales dépourvues de toute découpe.

L'autre garniture de frottement est alors fixée sur les languettes de préférence par collage.

Par collage des languettes les unes par rapport aux autres, par exemple les languettes 471, on peut former un sous-ensemble.

Ce disque de support unique peut comporter deux séries de pales tripodes alternant les unes avec les autres comme à la figure 14 du susmentionné document.

Une des séries étant plus raide que l'autre, à savoir, la série de pales sur la zone centrale desquelles est rapportée par collage la garniture de frottement destinée à coopérer avec le plateau de réaction de l'embrayage.

En variante (figure 5) on peut utiliser les pales de la figure 15 du susmentionné document. Cela est particulièrement intéressant lorsque deux disques 161,162 montés dos-à-dos sont prévus, avec leurs zones périphériques de portée 221B en contact les unes avec les autres.

Dans ce cas on obtient de très grandes surfaces de collage, le disque 161,162 comportant par exemple seize pales très rapprochées les unes des autres.

Le disque porte-garnitures peut comporter deux disques comme dans les figures 1 et 3 avec des moyens d'accouplement limitant l'écartement entre les disques réalisé à l'aide de pattes 505 découpées dans les disques 161,162 à la faveur de passages ou trous 506 et ce radialement en-dessous des plis tangentiels 380 (figure 1).

La patte 505 parallèle au plan de la partie centrale du disque 161,162 est décalée axialement par rapport à cette dite partie centrale à laquelle elle se raccorde par un pli incliné 512.

Là également on crée un sous-ensemble par montage du type baionnette. Une patte 505 de l'un des disques étant engagée dans un trou 506 de l'autre disque puis tournée circonférentiellement pour venir en prise soit avec une patte associée 505 pratiquée dans l'autre disque ou en variante avec le bord du trou 506 (alors de taille réduite) de l'autre disque.

Dans ce cas, seul l'un des disques présente un crochet propre à coopérer avec une surface de butée portée par l'autre disque et formée par le contour du trou 506.

L'un des disques 161,162 peut être dépourvu de pales tripodes, tandis que l'autre disque est par exemple analogue à celui de la figure 1.

Dans ce cas, toute la progressivité est due à ce disque.

Les pieds des pales peuvent comporter en partie les plis tangentiels 380.

Bien entendu le nombre de moyens d'accouplement dépend des applications. En pratique une partie seulement (au moins trois de préférence) desdites pales tripodes, est dotée de crochets.

Bien entendu les pales tripodes peuvent être rapportées par rivetage sur les disques de support pour former la partie périphérique de ceux-ci, comme par exemple à la figure 32 du susmentionné document EP 0 579 554.

Dans ce cas, on peut prévoir également deux disques accolés avec les moyens d'accouplement 501,502-500 de la figure 1. Dans ce cas, les languettes 772 dans le plan du disque de support présentent à leur périphérie externe des plis obliques délimitant des zones périphériques de portée décalées en direction des zones centrales de portée des pales tripodes 771. Ces pales présentent ici une languette 725 affectant le pli longitudinal et formée à la faveur d'une découpe 726.

Dans tous les cas, les crochets d'un des disques sont admis à coopérer avec une surface de butée associée portée par l'autre disque et former par exemple par les pattes des crochets.

En variante (figure 7) les moyens d'accouplement à action axiale unidirectionnels propres à limiter l'écartement axial entre les deux disques de support 161,162 peuvent comporter des colonnettes 1501. Ces colonnettes sont fixées par leur pied à l'une des portées centrales 221A de l'un des disques 161,162 et traversent par leur fût l'autre zone centrale 221A de l'autre disque 162,161 pour présenter au-delà de leur fût une tête.

Par leur tête elles prennent appui sur cette autre dite zone centrale 221A pour limiter l'écartement entre les deux zones centrales en regard 221A et donc entre les deux disques. La zone centrale 221A, trouée pour passage du fût de la colonnette, est admise à coulisser le long dudit fût.

Bien entendu comme visible dans cette figure 7, il faut pratiquer des trous de dégagement dans les garnitures de frottement 131,132, fixées par collage sur les zones centrales de portée 221A, pour éviter toute interférence de la tête et des pieds des colonnettes avec lesdites garnitures de frottement.

Cette réalisation est analogue à celle de la figure 35 du susmentionné document EP 0 579 554, la différence étant que ces colonnettes ne participent pas à la fixation des disques de support.

Bien entendu le nombre de moyens d'accouplement dépend des applications et peut être inférieur au nombre de pales tripodes.

Enfin dans la mesure où on prévoit des trous de dégagement dans les garnitures de frottement 131,132, la patte 501 ou 502 peut coopérer directement avec le bord de l'ouverture 500 de la zone de portée centrale 221A associée à l'autre disque de support.

De même à la figure 3, on peut également prévoir des trous de dégagement dans les garnitures 131,132, fixées par collage sur les zones centrales de portée 221A, pour éviter toute interférence entre les pattes 503,504 et lesdites garnitures de frottement.

Bien entendu, comme visible à la figure 7, les zones de portée périphériques 522B peuvent très bien ne pas être au contact l'une de l'autre, lorsque l'embrayage est désengagé.

Ainsi lors de l'engagement de l'embrayage, on obtient un palier dont le serrage correspondant à une venue en prise des plages 522B les unes avec les autres.

Ceci est rendu possible grâce aux moyens d'accouplement.

Les crochets 503,504-505,506,511 peuvent être remplacés par les colonnettes de la figure 7.

## Revendications

1. Disque porte-garnitures propre à la constitution d'un disque de friction, notamment pour véhicule automobile, du genre comportant au moins un disque de support (161, 162), dit premier disque de support, comprenant une partie centrale (161, 162) et une partie périphérique fractionnée en pales radiales (572) propre à recevoir deux garnitures de frottement (131, 132) s'étendant de part et d'autre de ladite partie périphérique, chacune desdites pales ayant un axe de symétrie radial (161, 162) et comprenant une zone centrale (221A) décalée axialement par rapport à la partie centrale (161, 162) dudit disque de support en étant raccordée pour se faire à ladite partie centrale par un pied (380) doté d'un pli tangentiel (380) perpendiculaire à l'axe de symétrie radial de ladite pale, dans lequel, ladite zone centrale (221A) se rétrécit en direction de la périphérie externe du disque de support (161, 162) et dans lequel chaque pale comporte au moins une zone de portée et de fixation (221A) globalement parallèle au plan moyen de ladite partie centrale du disque de support (161, 162) pour contact avec l'une des garnitures de frottement (131, 132), dite première garniture de frottement (131, 132), et fixation de celle-ci, caractérisé en ce que, pour formation de pales du type tripode, d'une part, la zone de portée et de fixation (221A) est constituée par la zone centrale (221) et, d'autre part, certaines au moins des pales (572) présentent à leur périphérie externe deux zones périphériques de portée supplémentaires (522B) de part et d'autre de ladite zone centrale de portée (221A), lesdites zones périphériques de portées étant décalées axialement par rapport à la zone centrale de portée (221A) et étant raccordée chacune par un pli oblique par rapport à l'axe de symétrie radiale de ladite pale en sorte que lesdits plis convergent en direction de la périphérie externe des pales et en ce que la première garniture de frottement (131, 132) est directement collée sur ladite zone centrale de portée (221A) associée.

2. Disque porte-garnitures selon la revendication 1, caractérisé en ce que les zones périphériques de portée (522B) sont aptes à entrer en contact avec l'autre des garnitures de frottement (131, 132), dite deuxième garniture de frottement.

3. Disque porte-garnitures selon la revendication 1, caractérisé en ce qu'il comporte un deuxième disque de support (161, 162) accolé au premier disque de support (131, 132), et en ce que l'autre des garnitures de frottement (131, 132) dite deuxième garniture de frottement, est fixée par collage sur le deuxième disque de support (161, 162).

4. Disque porte-garnitures selon la revendication 3, caractérisé en ce que le deuxième disque de support (161, 162) comporte comme le premier disque de support des pales tripodes, avec des zones centrales de portée (221A) sur lesquelles est fixée la deuxième garniture de frottement, et en ce que les deux disques de support (161, 162) sont montés dos à dos en sorte que les zones centrales de portée (221A) des pales tripodes sont en vis à vis.

5. Disque porte-garnitures selon la revendication 4, caractérisé en ce que les zones périphériques de portées des pales tripodes sont en contact les unes avec les autres.

6. Disque porte-garnitures selon la revendication 4 ou 5, caractérisé en ce que des moyens d'accouplement (500,501,502-503,504-505,506-1501) à action axiale unidirectionnels propres à limiter l'écartement axial entre les deux disques de support (161,162) interviennent entre ceux-ci.

7. Disque porte-garnitures selon la revendication 6, caractérisé en ce que lesdits moyens d'accouplement sont implantés au niveau de certaines au moins des zones centrales de portée (221A) des pales tripodes.

8. Disque porte-garnitures selon la revendication 6, caractérisé en ce que lesdits moyens d'accouplement sont implantés au niveau d'au moins certaines zones périphériques de portée (522B) des pales tripodes.

9. Disque porte-garnitures selon la revendication 6, caractérisé en ce que lesdits moyens d'accouplement sont implantés dans les disques support (161,162) au niveau de certains au moins des plis tangentiels des pales tripodes.

10. Disque porte-garnitures selon l'une quelconque des revendications 6 à 9, caractérisé en ce que lesdits moyens d'accouplement comportent des crochets (501,502,503,504,505).

11. Disque porte-garnitures selon la revendication 10, caractérisé en ce que les crochets comportent une patte (501 à 505) s'étendant de manière parallèle à l'un des éléments zone centrale de portée (221A) - zone périphérique de portée (522B) - disque de support (161,162) et se raccorde audit élément par un pli (510 à 512).

12. Disque porte-garnitures selon la revendication 11, caractérisé en ce que les pattes (501,502) sont formées à la faveur d'une découpe (500) en forme de trou oblong pratiquée dans la zone centrale de portée (221A).

13. Disque porte-garnitures selon la revendication 11, caractérisé en ce que les pattes (503,504) sont formées à la périphérie externe des zones périphériques de portée (522B).

14. Disque porte-garnitures selon d'une quelconque des revendications 6 à 9, caractérisé en ce que lesdits moyens d'accouplement consistent en des colonnettes, dont le pied est fixé à l'une des zones centrales de portée (221A) de l'un des disques de support (161,162), et dont le fût traverse l'autre zone centrale de portée (221A) de l'autre disque de support (162,161) et présentent une tête propre à venir au contact de cette autre zone centrale de portée pour limiter l'écartement entre les deux pales tripodes des deux disques de support.

## Claims

1. A liner support disc for inclusion in a clutch friction wheel, especially for a motor vehicle, of the kind comprising at least one support disc (161, 162), called a first support disc, having a central portion (161, 162) and a peripheral portion divided into radial blades (572) which are adapted to receive two friction liners (131, 132) lying on either side of the said peripheral portion, with each of the said blades having a radial axis of symmetry (161, 162) and including a central zone (221A) which is offset axially with respect to the central portion (161, 162) of the said support disc, being joined for this purpose to the said central portion by a foot portion (380) having a tangential bend (380) at right angles to the axis of radial symmetry of the said blade, in which the said central zone (221A) becomes narrower towards the outer periphery of the support disc (161, 162), and in which each blade includes at least one supporting and fastening zone (221A) generally parallel to the mean plane of the said central portion of the support disc (161, 162), for contact with one of the friction liners (131, 132), called a first friction liner (131, 132), and for fastening to the latter, characterised in that, to constitute blades of the tripod type, firstly, the supporting and fastening zone (221A) consists of the central zone (221), and secondly, at least some of the blades (572) have at their outer periphery two supplementary peripheral support zones (522B) on either side of the said central supporting zone (221A), the said peripheral support zones being offset axially with respect to the central supporting zone (221A), with each of them being joined through a bent portion which is oblique with respect to the radial axis of symmetry of the said blade, such that the said bent portions are convergent towards the outer periphery of the blades, and in that the first friction liner (131, 132) is adhesively secured directly on the associated said central supporting zone (221A).

2. A liner support disc according to Claim 1, characterised in that the peripheral support zones (522B) are adapted to make contact with the other one of the said friction liners (131, 132), called the second friction liner.

3. A liner support disc according to Claim 1, characterised in that it includes a second support disc (161, 162) engaged against the first support disc (131, 132), and in that the other one of the friction liners (131, 132), called the second friction liner, is secured adhesively on the second support disc (161, 162).

4. A liner support disc according to Claim 3, characterised in that the second support disc (161, 162) includes, like the first support disc, tripod blades with central supporting zones (221A) on which the second friction liner is fixed, and in that the two support discs (161, 162) are mounted back-to-back so that the central supporting zones (221A) of the tripod blades are in facing relationship.

5. A liner support disc according to Claim 4, characterised in that the peripheral support zones of the tripod blades are in contact with each other.

6. A liner support disc according to Claim 4 or Claim 5, characterised in that uni-directionally axially acting coupling means (500, 501, 502-503, 504-505, 506-1501), adapted to limit the axial spacing between the two support discs (161, 162), are interposed between these latter.

7. A liner support disc according to Claim 6, characterised in that the said coupling means are located at the level of at least some of the central supporting zones (221A) of the tripod blades.

8. A liner support disc according to Claim 6, characterised in that the said coupling means are located at the level of at least some of the peripheral support zones (522B) of the tripod blades.

9. A liner support disc according to Claim 6, characterised in that the said coupling means are located in the support discs (161, 162) at the level of at least some of the tangential bent portions of the tripod blades.

10. A liner support disc according to any one of Claims 6 to 9, characterised in that the said coupling means comprise hooks (501, 502, 503, 504, 505).

11. A liner support disc according to Claim 10, characterised in that the hooks comprise a lug (501 to 505) extending parallel to one of the elements consisting of the central supporting zone (221A), the peripheral support zones (522B), and the support disc (161, 162), and are joined to the said element through a bent portion (510 to 512).

12. A liner support disc according to Claim 11, characterised in that the lugs (501, 502) are formed in an aperture (500) in the form of an oblong hole formed in the central supporting zone (221A).

13. A liner support disc according to Claim 11, characterised in that the lugs (503, 504) are formed at the outer periphery of the peripheral support zones (522B).

14. A liner support disc according to any one of Claims 6 to 9, characterised in that the said coupling means consist of short posts, the foot of which is fixed to one of the central supporting zones (221A) of one of the support discs (161, 162), with its shank extending through the other central supporting zone (221A), of the other support disc (162, 161), the post having a head arranged to make contact with the said other central supporting zone in order to limit spacing between the two tripod blades of the two support discs.

## Patentansprüche

1. Reibbeläge tragende Scheibe zur Bildung einer Reibungsscheibe, insbesondere für Kraftfahrzeuge, umfassend mindestens eine Trägerscheibe (161, 162), die als erste Trägerscheibe bezeichnet wird und die einen Mittelteil (161, 162) und einen Umfangsteil umfaßt, der in radiale Ansätze (527) unterteilt ist, um Reibbeläge (131, 132) aufzunehmen, die sich beiderseits des besagten Umfangsteils erstrecken, wobei jedes der besagten Segmente eine radiale Symmetrieachse (161, 162) hat und einen mittleren Bereich (221A) enthält, der im Verhältnis zum Mittelteil (161, 162) der besagten Trägerscheibe axial versetzt ist, wobei er sich dazu an den besagten Mittelteil über einen Fuß (380) anschließt, der mit einer tangentialen Biegung (380) senkrecht zur radialen Symmetrieachse des besagten Segments versehen ist, wobei sich der besagte mittlere Bereich (221A) in Richtung des äußeren Umfangs der Trägerscheibe (161, 162) verengt und wobei jedes Segment mindestens einen Auflage- und Befestigungsbereich (221A) umfaßt, der insgesamt parallel zur Mittelebene des besagten Mittelteils der Trägerscheibe (161, 162) verläuft, für den Kontakt mit einem der Reibbeläge (131, 132), der als erster Reibbelag (131, 132) bezeichnet wird, und für dessen Befestigung , **dadurch gekennzeichnet,** daß zur Bildung von Segmenten mit drei Auflagestellen einerseits der Auflage- und Befestigungsbereich (221A) aus dem mittleren Bereich (221) besteht und andererseits zumindest bestimmte der Segmente (572) an ihrem äußeren Umfang zwei zusätzliche Umfangsauflagebereiche (522B) beiderseits des besagten mittleren Auflagebereichs (221A) aufweisen, wobei die besagten Umfangsauflagebereiche im Verhältnis zum mittleren Auflagebereich (221A) axial versetzt und jeweils über eine im Verhältnis zur radialen Symmetrieachse des besagten Segments schräge Biegung angeschlossen sind, so daß die besagten Biegungen in Richtung des äußeren Umfangs der Segmente zusammenlaufen, und daß der erste Reibbelag (131, 132) direkt auf dem besagten zugehörigen mittleren Auflagebereich (221A) verklebt ist.

2. Reibbeläge tragende Scheibe nach Anspruch 1, **dadurch gekennzeichnet,** daß die Umfangsauflagebereiche (522B) mit dem anderen der Reibbeläge (131, 132), der als zweiter Reibbelag bezeichnet wird, in Kontakt treten können.

3. Reibbeläge tragende Scheibe nach Anspruch 1, **dadurch gekennzeichnet,** daß sie eine zweite Trägerscheibe (161, 162) umfaßt, die an der ersten Trägerscheibe (161, 162) angefügt ist, und daß der andere der Reibbeläge (131, 132), der als zweiter Reibbelag bezeichnet wird, mittels Verkleben auf der zweiten Trägerscheibe (161, 162) befestigt ist.

4. Reibbeläge tragende Scheibe nach Anspruch 3, **dadurch gekennzeichnet,** daß die zweite Trägerscheibe (161, 162) wie die erste Trägerscheibe Segmente mit drei Auflagestellen mit mittleren Auflagebereichen (221A) umfaßt, auf denen der zweite Reibbelag befestigt ist, und daß die beiden Trägerscheiben (161, 162) aneinander angefügt sind, so daß die mittleren Auflagebereiche (221A) der Segmente mit drei Auflagestellen einander gegenüberliegen.

5. Reibbeläge tragende Scheibe nach Anspruch 4, **dadurch gekennzeichnet,** daß die Umfangsauflagebereiche der Segmente mit drei Auflagestellen miteinander in Kontakt stehen.

6. Reibbeläge tragende Scheibe nach Anspruch 4 oder 5, **dadurch gekennzeichnet,** daß einseitig gerichtete axial wirksame Anfügemittel (500, 501, 502-503, 504-505, 506-1501), die die axiale Entfernung zwischen den beiden Trägerscheiben (161, 162) begrenzen können, zwischen diesen zum Einsatz kommen.

7. Reibbeläge tragende Scheibe nach Anspruch 6, **dadurch gekennzeichnet,** daß die besagten Anfügemittel in Höhe zumindest bestimmter der mittleren Auflagebereiche (221A) der Segmente mit drei Auflagestellen angebracht sind.

8. Reibbeläge tragende Scheibe nach Anspruch 6, **dadurch gekennzeichnet,** daß die besagten Anfügemittel in Höhe zumindest bestimmter der Umfangsauflagebereiche (522B) der Segmente mit drei Auflagestellen angebracht sind.

9. Reibbeläge tragende Scheibe nach Anspruch 6, **dadurch gekennzeichnet,** daß die besagten Anfügemittel in den Trägerscheiben (161, 162) in Höhe zumindest bestimmter der tangentialen Biegungen der Segmente mit drei Auflagestellen angebracht sind.

10. Reibbeläge tragende Scheibe nach einem der Ansprüche 6 bis 9, **dadurch gekennzeichnet,** daß die besagten Anfügemittel Haken (501, 502, 503, 504, 505) umfassen.

11. Reibbeläge tragende Scheibe nach Anspruch 10, **dadurch gekennzeichnet,** daß die Haken einen Ansatz (501 bis 505) umfassen, der sich parallel zu einem der Elemente mittlerer Auflagebereich (221A) - Umfangsauflagebereich (522B) - Trägerscheibe (161, 162) erstreckt und sich an das besagte Element über eine Biegung (510 bis 512) anschließt.

12. Reibbeläge tragende Scheibe nach Anspruch 11, **dadurch gekennzeichnet,** daß die Ansätze (501, 502) mittels eines Einschnitts (500) in Form eines Langlochs ausgebildet sind, das in den mittleren Auflagebereich (221A) eingearbeitet ist.

13. Reibbeläge tragende Scheibe nach Anspruch 11, **dadurch gekennzeichnet,** daß die Ansätze (503, 504) am äußeren Umfang der Umfangsauflagebereiche (522B) ausgebildet sind.

14. Reibbeläge tragende Scheibe nach einem der Ansprüche 6 bis 9, **dadurch gekennzeichnet,** daß die besagten Anfügemittel aus Distanzbolzen bestehen, deren Fuß an einem der mittleren Auflagebereiche (221A) einer der Trägerscheiben (161, 162) befestigt ist und deren Schaft durch den anderen mittleren Auflagebereich (221A) der anderen Trägerscheibe (162, 161) hindurchgeht und die einen Kopf aufweisen, der mit diesem anderen mittleren Auflagebereich in Kontakt kommen kann, um die Entfernung zwischen den zwei Segmenten mit drei Auflagestellen der beiden Trägerscheiben zu begrenzen.
